# EUROPÄISCHE PATENTANMELDUNG

(11) **EP 2 001 110 A1**
(43) Veröffentlichungstag der Anmeldung: **10.12.2008**
(21) Anmeldenummer: 07109639.0
(22) Anmeldetag: 05.06.2007
(51) Int. Cl.: H02M 1/12, H02M 7/17, H02M 7/23, H02M 7/77, H02M 7/81

(54) **Umrichterschaltung**

(71) Anmelder: ABB Schweiz AG, 5400 Baden (CH)
(72) Erfinder: Herbst, Werner, 8166 Niederwenigen (CH)
(74) Vertreter: ABB Patent Attorneys

(57) **Zusammenfassung**

Es wird eine Umrichterschaltung mit einer ersten und einer zweiten dreiphasigen sechspulsigen Gleichrichterschaltung (1, 2) angegeben, wobei die Gleichspannungsseiten der erste und zweiten dreiphasigen sechspulsigen Gleichrichterschaltung (1, 2) parallel miteinander verbunden sind. Weiterhin umfasst die Umrichterschaltung einen ersten und einen zweiten Transformator (A, B), wobei die Wechselspannungsanschlüsse der ersten dreiphasigen sechspulsigen Gleichrichterschaltung (1) mit den sekundärseitigen Anschlüssen des ersten Transformators (A) verbunden sind und die Wechselspannungsanschlüsse der zweiten dreiphasigen sechspulsigen Gleichrichterschaltung (2) mit den sekundärseitigen Anschlüssen des zweiten Transformators (B) verbunden sind, und wobei jeder primärseitige Anschluss (A1, A2, A3) des ersten Transformators (A) mit jeweils genau einem primärseitigen Anschluss (B1, B2, B3) des zweiten Transformators (B) verbunden ist. Damit keine oder nur sehr geringe Ausgleichsströme durch eine Parallelschaltung der Gleichspannungsseite einer ersten dreiphasigen sechspulsigen Gleichrichterschaltung mit der Gleichspannungsseite einer zweiten dreiphasigen sechspulsigen Gleichrichterschaltung fliessen ist in jede Verbindung eines primärseitigen Anschlusses (A1, A2, A3) des ersten Transformators (A) mit einem primärseitigen Anschluss (B1, B2, B3) des zweiten Transformators (B) eine Saugdrossel (7) eingeschaltet.

## Beschreibung

### Technisches Gebiet

Die Erfindung bezieht sich auf das Gebiet der leistungselektronischen Schaltungen. Sie geht aus von einer Umrichterschaltung gemäss dem Oberbegriff des unabhängigen Anspruchs.

### Stand der Technik

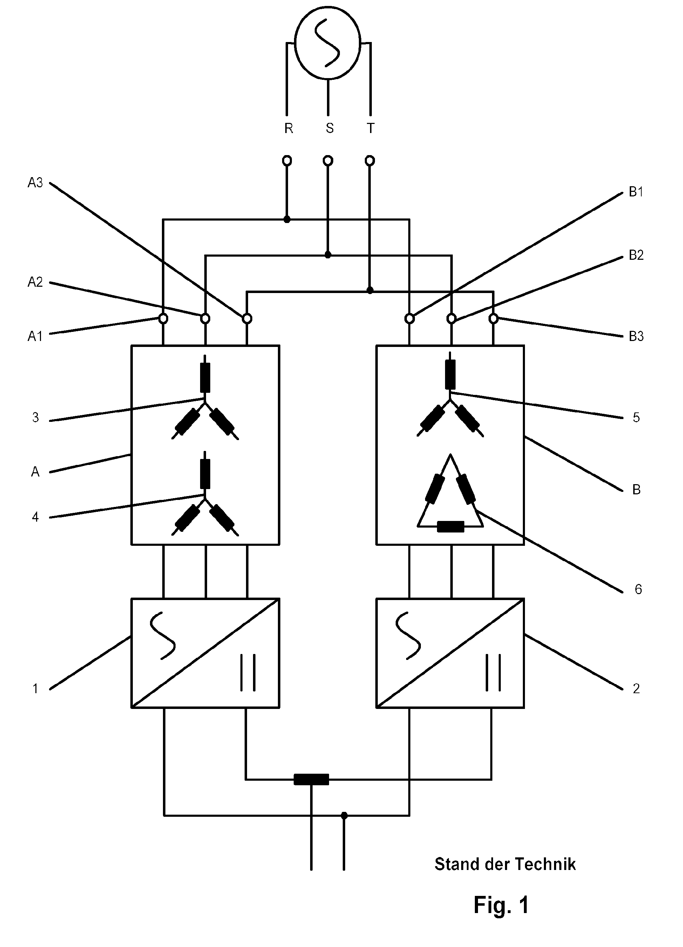

Umrichterschaltungen mit einer ersten und einer zweiten dreiphasigen sechspulsigen Gleichrichterschaltung werden heute in einer Fülle von leistungselektronischen Anwendungen eingesetzt. In Fig. 1 ist eine typische Umrichterschaltung nach dem Stand der Technik mit zwei solchen dreiphasigen sechspulsigen Gleichrichterschaltungen 1, 2 angegeben. Darin ist die erste dreiphasige sechspulsige Gleichrichterschaltung 1 gleichspannungsseitig mit der zweiten dreiphasigen sechspulsigen Gleichrichterschaltung 2 parallel geschaltet. Die Wechselspannungsanschlüsse der ersten dreiphasigen sechspulsigen Gleichrichterschaltung 1 sind mit den sekundärseitigen Anschlüssen eines ersten dreiphasigen Transformators A verbunden und die Wechselspannungsanschlüsse der zweiten dreiphasigen sechspulsigen Gleichrichterschaltung 2 sind mit den sekundärseitigen Anschlüssen eines zweiten dreiphasigen Transformators B verbunden. Ferner ist jeder primärseitiger Anschluss A1, A2, A3 des ersten Transformators A mit jeweils genau einem primärseitigen Anschluss B1, B2, B3 des zweiten Transformators B verbunden. An jede solche Verbindung ist typischerweise eine Phase R, S, T eines dreiphasigen elektrischen Wechselspannungsnetzes angeschlossen oder anschliessbar. Die Primärwicklungen 3 sowie die Sekundärwicklungen 4 des ersten Transformators A sind jeweils in Sternschaltung geschaltet. Hingegen sind die Primärwicklungen 5 des zweiten Transformators B in Sternschaltung und die Sekundärwicklungen 6 des zweiten Transformators B in Dreieckschaltung geschaltet. In der EP 0 620 635 A1 ist eine derartige vorstehend beschriebene Umrichterschaltung erwähnt, wobei in eine Verbindung der gleichspannungsseitigen Parallelschaltung der ersten mit der zweiten dreiphasigen sechspulsigen Gleichrichterschaltung 1, 2 zusätzlich eine Saugdrossel eingeschaltet ist, wie in Fig. 1 gezeigt. Die Spannungen an den sekundärseitigen Anschlüssen der Transformatoren A und B, d.h. an den Wechselspannungsseiten der beiden dreiphasigen sechspulsigen Gleichrichterschaltungen 1, 2 sind zueinander um 30° phasenverschoben. Die beiden dreiphasigen sechspulsigen Gleichrichterschaltungen 1, 2 und die Parallelschaltung sind üblicherweise in einem Gebäude, in einem Prozessraum, in einem Schaltraum oder Schaltschrank untergebracht. Diese Räume werden zu Bedien- und Wartungszwecken vom entsprechenden Personal betreten. Die beiden Transformatoren A, B hingegen sind typischerweise ausserhalb eines solchen Gebäudes im Freien installiert und werden normalerweise nicht betreten.

Problematisch bei der vorstehend beschriebenen Umrichterschaltung ist, dass durch die Parallelschaltung der ersten mit der zweiten dreiphasigen sechspulsigen Gleichrichterschaltung 1, 2 ein Ausgleichsstrom mit einem Wechselanteil der sechsfachen Frequenz, d.h. die sechste Oberschwingung bezüglich der Netzspannung des elektrischen Wechselspannungsnetzes fliesst. Dieser Ausgleichstrom generiert in jeder Verbindung des primärseitigen Anschluss A1, A2, A3 des ersten Transformators A mit dem primärseitigen Anschluss B1, B2, B3 des zweiten Transformators B einen Ausgleichsstrom mit einem Wechselanteil der fünffachen und siebenfachen Frequenz, d.h. die fünfte und siebte Oberschwingung bezüglich der Netzspannung des elektrischen Wechselspannungsnetzes. Diese Ausgleichströme sind in elektrischen Anlagen und bezüglich des elektrischen Wechselspannungsnetzes unerwünscht. Die in die Verbindung der Parallelschaltung der ersten mit der zweiten dreiphasigen sechspulsigen Gleichrichterschaltung 1, 2 eingeschaltete Saugdrossel vermindert zwar den, durch die Parallelschaltung der ersten mit der zweiten dreiphasigen sechspulsigen Gleichrichterschaltung 1, 2 fliessenden Ausgleichsstrom mit einem Wechselanteil der sechsfachen Frequenz bezüglich der Netzspannung des elektrischen Wechselspannungsnetzes, jedoch treten dadurch grosse magnetische Felder an der Saugdrossel und in den gängigerweise als Schienen realisierten Verbindungen der Parallelschaltung der ersten mit der zweiten dreiphasigen sechspulsigen Gleichrichterschaltung 1, 2 auf. Bei grossen Stromrichteranlagen wird gängigerweise diese Parallelschaltung mit Schienen ausserhalb der Gleichrichterschaltungen 1, 2 realisiert, welche Schienen zwecks Oberschwingungsdämpfung zu Schienenschlaufen ausgebildet werden. Dadurch treten grosse magnetische Wechselfelder in diesen Schienenschlaufen auf. Diese Felder sind für das Bedien- und Wartungspersonal, welches sich üblicherweise im selben Raum aufhält, nicht zulässig und können gesundheitsschädlich sein.

### Darstellung der Erfindung

Aufgabe der Erfindung ist es deshalb, eine Umrichterschaltung anzugeben, die keine oder nur sehr geringe Ausgleichsströme durch eine Parallelschaltung der Gleichspannungsseite einer ersten dreiphasigen sechspulsigen Gleichrichterschaltung mit der Gleichspannungsseite einer zweiten dreiphasigen sechspulsigen Gleichrichterschaltung aufweist.

Diese Aufgabe wird durch die Merkmale des Anspruchs 1 gelöst. In den abhängigen Ansprüchen sind vorteilhafte Weiterbildungen der Erfindung angegeben.

Die erfindungsgemässe Umrichterschaltung umfasst eine erste und eine zweite dreiphasige sechspulsige Gleichrichterschaltung, wobei die Gleichspannungsseiten der erste und zweiten dreiphasigen sechspulsigen Gleichrichterschaltung parallel miteinander verbunden sind. Weiterhin umfasst die Umrichterschaltung einen ersten und einen zweiten Transformator, wobei die Wechselspannungsanschlüsse der ersten dreiphasigen sechspulsigen Gleichrichterschaltung mit den sekundärseitigen Anschlüssen des ersten Transformators verbunden sind und die Wechselspannungsanschlüsse der zweiten dreiphasigen sechspulsigen Gleichrichterschaltung mit den sekundärseitigen Anschlüssen des zweiten Transformators verbunden sind. Darüberhinaus ist jeder primärseitige Anschluss des ersten Transformators mit jeweils genau einem primärseitigen Anschluss des zweiten Transformators verbunden. Erfindungsgemäss ist nun in jede Verbindung eines primärseitigen Anschlusses des ersten Transformators mit einem primärseitigen Anschluss des zweiten Transformators eine Saugdrossel eingeschaltet. Die jeweilige Saugdrossel bewirkt vorteilhaft, dass durch die gleichspannungsseitige Parallelschaltung der ersten mit der zweiten dreiphasigen sechspulsigen Gleichrichterschaltung kein oder nur noch ein sehr geringer Ausgleichsstrom mit einem Wechselanteil der sechsfachen Frequenz, d.h. die sechste Oberschwingung bezüglich einer Netzspannung beispielsweise eines an die Umrichterschaltung angeschlossenen elektrischen Wechselspannungsnetzes fliesst. In jeder Verbindung des primärseitigen Anschlusses des ersten Transformators mit dem primärseitigen Anschluss des zweiten Transformators tritt damit auch kein oder nur noch ein sehr geringer bzw. stark gedämpften Ausgleichsstrom mit einem Wechselanteil der fünffachen und siebenfachen Frequenz, d.h. die fünfte und siebte Oberschwingung bezüglich einer Netzspannung beispielsweise eines an die Umrichterschaltung angeschlossenen elektrischen Wechselspannungsnetzes auf. Durch den fehlenden oder zumindest sehr stark reduzierten Ausgleichsstrom mit einem Wechselanteil der sechsfachen Frequenz durch die Parallelschaltung der ersten mit der zweiten dreiphasigen sechspulsigen Gleichrichterschaltung treten mit Vorteil keine oder nur noch sehr geringe magnetische Felder in den gängigerweise als Schienen realisierten Verbindungen der Parallelschaltung der ersten mit der zweiten dreiphasigen sechspulsigen Gleichrichterschaltung auf, so dass sich das Bedien- und Wartungspersonal problemlos in der Nähe der beiden Gleichrichterschaltungen und deren Verschienungen aufhalten und arbeiten kann, ohne gesundheitlichen Schaden zu nehmen. Die Schienen selbst müssen dadurch nicht mehr aufwendig als Schienenschlaufen, wie aus dem Stand der Technik bekannt, ausgebildet werden, sondern können vorteilhaft als kurze Verbindungen ausgeführt werden und sogar in den Gleichrichterschaltungen verlaufen, so dass zusätzlich Material und Platz eingespart werden kann.

Diese und weitere Aufgaben, Vorteile und Merkmale der vorliegenden Erfindung werden aus der nachfolgenden detaillierten Beschreibung bevorzugter Ausführungsformen der Erfindung in Verbindung mit der Zeichnung offensichtlich.

### Kurze Beschreibung der Zeichnungen

Es zeigen:
- Fig. 1: eine Ausführungsform einer Umrichterschaltung nach dem Stand der Technik und
- Fig. 2: eine Ausführungsform einer erfindungsgemässen Umrichterschaltung.

Die in der Zeichnung verwendeten Bezugszeichen und deren Bedeutung sind in der Bezugszeichenliste zusammengefasst aufgelistet. Grundsätzlich sind in den Figuren gleiche Teile mit gleichen Bezugszeichen versehen. Die beschriebenen Ausführungsformen stehen beispielhaft für den Erfindungsgegenstand und haben keine beschränkende Wirkung.

### Wege zur Ausführung der Erfindung

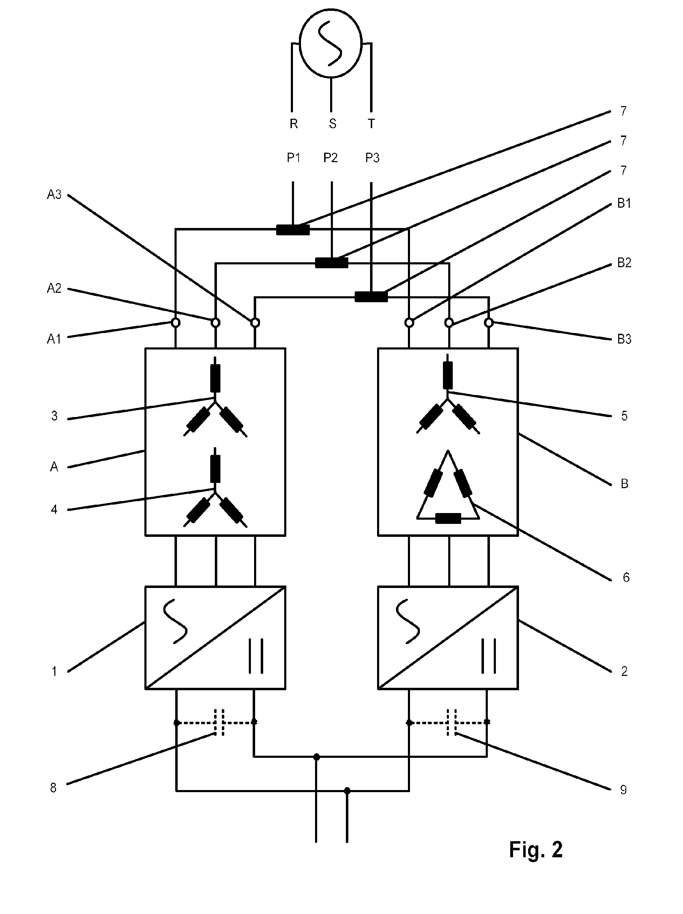

In Fig. 2 ist eine Ausführungsform einer erfindungsgemässen Umrichterschaltung dargestellt. Darin umfasst die Umrichterschaltung eine erste und eine zweite dreiphasige sechspulsige Gleichrichterschaltung 1, 2, wobei die Gleichspannungsseiten der erste und zweiten dreiphasigen sechspulsigen Gleichrichterschaltung 1, 2 parallel miteinander verbunden sind. Zudem umfasst die Umrichterschaltung einen ersten und einen zweiten Transformator A, B, wobei die Wechselspannungsanschlüsse der ersten dreiphasigen sechspulsigen Gleichrichterschaltung 1 mit den sekundärseitigen Anschlüssen des ersten Transformators A verbunden sind und die Wechselspannungsanschlüsse der zweiten dreiphasigen sechspulsigen Gleichrichterschaltung 2 mit den sekundärseitigen Anschlüssen des zweiten Transformators B verbunden sind. Gemäss Fig. 2 ist jeder primärseitige Anschluss A1, A2, A3 des ersten Transformators A mit jeweils genau einem primärseitigen Anschluss B1, B2, B3 des zweiten Transformators B verbunden. Erfindungsgemäss ist nun in jede Verbindung eines primärseitigen Anschlusses A1, A2, A3 des ersten Transformators A mit einem primärseitigen Anschluss B1, B2, B3 des zweiten Transformators B eine Saugdrossel 7 eingeschaltet. Die jeweilige Saugdrossel 7 bewirkt vorteilhaft, dass durch die Parallelschaltung der ersten mit der zweiten dreiphasigen sechspulsigen Gleichrichterschaltung 1, 2 kein oder nur noch ein sehr geringer Ausgleichsstrom mit einem Wechselanteil der sechsfachen Frequenz, d.h. die sechste Oberschwingung bezüglich einer Netzspannung beispielsweise eines an die Umrichterschaltung angeschlossenen elektrischen Wechselspannungsnetzes fliesst. In jeder Verbindung des primärseitigen Anschlusses A1, A2, A3 des ersten Transformators A mit dem primärseitigen Anschluss B1, B2, B3 des zweiten Transformators B tritt damit auch kein oder nur noch ein sehr geringer bzw. stark gedämpften Ausgleichsstrom mit einem Wechselanteil der fünffachen und siebenfachen Frequenz, d.h. die fünfte und siebte Oberschwingung bezüglich einer Netzspannung beispielsweise eines an die Umrichterschaltung angeschlossenen elektrischen Wechselspannungsnetzes auf. Durch den fehlenden oder zumindest sehr stark reduzierten Ausgleichsstrom mit einem Wechselanteil der sechsfachen Frequenz durch die Parallelschaltung der ersten mit der zweiten dreiphasigen sechspulsigen Gleichrichterschaltung 1, 2 treten vorteilhaft auch keine oder nur noch sehr geringe magnetische Felder in den gängigerweise als Schienen realisierten Verbindungen der Parallelschaltung der ersten mit der zweiten dreiphasigen sechspulsigen Gleichrichterschaltung auf, so dass sich das Bedien- und Wartungspersonal problemlos in der Nähe der beiden Gleichrichterschaltungen 1, 2 und deren Verschienungen aufhalten und arbeiten kann, ohne gesundheitlichen Schaden zu nehmen. Die Schienen selbst müssen dadurch nicht mehr aufwendig als Schienenschlaufen ausgebildet werden, sondern können vorteilhaft als kurze Verbindungen und sogar in den Gleichrichterschaltungen erfolgen, so dass zusätzlich Material und Platz eingespart werden kann.

Um an die erfindungsgemässe Umrichterschaltung beispielsweise ein elektrisches Wechselspannungsnetz anschliessen zu können, bildet der Mittelabgriff einer jeden Saugdrossel 7 einen Phasenanschluss P1, P2, P3. Der Anschluss eines elektrischen Wechselspannungsnetzes mit Phasen R, S, T, wie in Fig. 2 beispielhaft gezeigt, ist dadurch ermöglicht. Es sei erwähnt, dass die Phasenanschlüsse P1, P2, P3 allgemein nutzbar, zum Beispiel auch zum Anschluss einer elektrischen Last dienen können, und nicht auf den Anschluss eines elektrischen Wechselspannungsnetzes beschränkt sind.

Zur Stabilisierung der gleichspannungsseitigen Gleichspannung der ersten dreiphasigen sechspulsigen Gleichrichterschaltung 1 ist optional ein erster kapazitiver Energiespeicher 8 mit der Gleichspannungsseite der ersten dreiphasigen sechspulsigen Gleichrichterschaltung 1 verbunden. Desweiteren ist zur Stabilisierung der gleichspannungsseitigen Gleichspannung der zweiten dreiphasigen sechspulsigen Gleichrichterschaltung 2 optional ein zweiter kapazitiver Energiespeicher 9 mit der Gleichspannungsseite der zweiten dreiphasigen sechspulsigen Gleichrichterschaltung 2 verbunden.

Gemäss Fig. 2 sind die Primärwicklungen 3 sowie die Sekundärwicklungen 4 des ersten Transformators A jeweils in Sternschaltung geschaltet. Dagegen sind die Primärwicklungen 5 des zweiten Transformators B in Sternschaltung und die Sekundärwicklungen 6 des zweiten Transformators B in Dreieckschaltung geschaltet. Die Wechselspannungen an den sekundärseitigen Anschlüssen des ersten Transformators A sind damit vorzugsweise um 30° phasenverschoben zu den Wechselspannungen an den sekundärseitigen Anschlüssen des zweiten Transformators B. Es sei erwähnt, dass die vorstehend erwähnte 30° Phasenverschiebung nicht ausschliesslich durch einen ersten Transformator A mit Primärwicklungen 3 sowie Sekundärwicklungen 4 jeweils in Sternschaltung und einen zweiten Transformator B mit Primärwicklungen 5 in Sternschaltung und Sekundärwicklungen 6 in Dreieckschaltung erzielt werden kann, sondern durch eine Vielzahl an Verschaltungsmöglichkeiten von Primärwicklungen 3, 5 und Sekundärwicklungen 4, 6 des ersten und zweiten Transformators A, B zu erreichen ist.

Um Platz einzusparen und eine kompakte Bauweise zu erreichen, weisen der erste Transformator A und der zweite Transformator B vorzugsweise einen gemeinsamen Transformatorkern auf. Um eine kompakte Bauweise zu erreichen ist es zudem denkbar, dass der erste Transformator A und der zweite Transformator B gemeinsam in einem Gehäuse untergebracht sind.

### Bezugszeichenliste

- 1: erste dreiphasige sechspulsige Gleichrichterschaltung
- 2: zweite dreiphasige sechspulsige Gleichrichterschaltung
- 3: Primärwicklung eines ersten Transformators A
- 4: Sekundärwicklung eines ersten Transformators A
- 5: Primärwicklung eines zweiten Transformators B
- 6: Sekundärwicklung eines zweiten Transformators B
- 7: Saugdrossel
- 8: erster kapazitiver Energiespeicher
- 9: zweiter kapazitiver Energiespeicher
- A: erster Transformator
- B: zweiter Transformator
- A1, A2, A3: primärseitige Anschlüsse des ersten Transformators A
- B1, B2, B3: primärseitige Anschlüsse des zweiten Transformators B

## Patentansprüche

1. Umrichterschaltung mit einer ersten und einer zweiten dreiphasigen sechspulsigen Gleichrichterschaltung (1, 2), wobei die Gleichspannungsseiten der erste und zweiten dreiphasigen sechspulsigen Gleichrichterschaltung (1, 2) parallel miteinander verbunden sind,
mit einem ersten und einem zweiten Transformator (A, B), wobei die Wechselspannungsanschlüsse der ersten dreiphasigen sechspulsigen Gleichrichterschaltung (1) mit den sekundärseitigen Anschlüssen des ersten Transformators (A) verbunden sind und die Wechselspannungsanschlüsse der zweiten dreiphasigen sechspulsigen Gleichrichterschaltung (2) mit den sekundärseitigen Anschlüssen des zweiten Transformators (B) verbunden sind, und
wobei jeder primärseitige Anschluss (A1, A2, A3) des ersten Transformators (A) mit jeweils genau einem primärseitigen Anschluss (B1, B2, B3) des zweiten Transformators (B) verbunden ist,
**dadurch gekennzeichnet,**
**dass** in jede Verbindung eines primärseitigen Anschlusses (A1, A2, A3) des ersten Transformators (A) mit einem primärseitigen Anschluss (B1, B2, B3) des zweiten Transformators (B) eine Saugdrossel (7) eingeschaltet ist.

2. Umrichterschaltung nach Anspruch 1, **dadurch gekennzeichnet, dass** der Mittelabgriff einer jeden Saugdrossel (7) einen Phasenanschluss (P1, P2, P3) bildet.

3. Umrichterschaltung nach Anspruch 1 oder 2, **dadurch gekennzeichnet, dass** ein erster kapazitiver Energiespeicher (8) mit der Gleichspannungsseite der ersten dreiphasigen sechspulsigen Gleichrichterschaltung (1) verbunden ist, und
dass ein zweiter kapazitiver Energiespeicher (9) mit der Gleichspannungsseite der zweiten dreiphasigen sechspulsigen Gleichrichterschaltung (2) verbunden ist.

4. Umrichterschaltung nach einem der Ansprüche 1 bis 3, **dadurch gekennzeichnet, dass** die Wechselspannungen an den sekundärseitigen Anschlüssen des ersten Transformators (A) um 30° phasenverschoben zu den Wechselspannungen an den sekundärseitigen Anschlüssen des zweiten Transformators (B) sind.

5. Umrichterschaltung nach einem der Ansprüche 1 bis 4, **dadurch gekennzeichnet, dass** der erste Transformator (A) und der zweite Transformator (B) einen gemeinsamen Transformatorkern aufweisen.

6. Umrichterschaltung nach einem der Ansprüche 1 bis 5, **dadurch gekennzeichnet, dass** der erste Transformator (A) und der zweite Transformator (B) gemeinsam in einem Gehäuse untergebracht sind.
